# EUROPEAN PATENT APPLICATION

(11) **EP 2 657 458 A2**
(43) Date of publication of application: **30.10.2013**
(21) Application number: 13165176.2
(22) Date of filing: 24.04.2013
(51) Int. Cl.: F01D 17/02, G01B 7/14

(54) **Tunable proximity sensor**

(30) Priority: 25.04.2012 US 201213455864
(71) Applicant: General Electric Company, Schenectady, New York 12345 (US)
(72) Inventor: Sheikman, Boris Leonid, Minden, NV Nevada 89423 (US); Weller, Nathan Andrew, Minden, NV Nevada 89423 (US); Lee, Yongjae, Niskayuna, NY New York 12309 (US)
(74) Representative: Picker, Madeline Margaret

(57) **Abstract**

A tunable proximity sensor 210 and a method of manufacturing the same are disclosed. The proximity sensor includes a cap 230 with different sections having different dielectric constants, shapes, and/or thicknesses. As the cap 230 is rotated with respect the sensing element, these non-uniform sections induce a different loading on the sensor element from the electromagnetic field, allowing the proximity sensor 210 to be tuned.

## Description

The subject matter disclosed herein relates to a tunable proximity sensor and a method of manufacturing the same.

Proximity sensors, including microwave sensors, are typically used to monitor the vibration, movement, or other operational characteristics of an asset (e.g., a turbine) or component thereof by measuring the distance between the proximity sensor and the asset or component. In an example of dynamic detection, a proximity sensor can be used to detect the frequency of the vibration of the component of the asset (e.g., vibration of the rotating shaft of a turbine) by monitoring any changes in the position of a component relative to the proximity sensor as the component rotates. In an example of static detection, a proximity sensor can be used to detect the expansion of a component as it warms up and expands, causing the component to move closer to the proximity sensor, or to measure the contraction of a component as it cools down and contracts, causing the component to move further from the proximity sensor. The proximity sensor can provide information about the operational characteristics of a component to other components of an inspection system. The inspection system displays graphical representations of the operational characteristics of the component, and provides an alarm or other indication when there is abnormal behavior of the component.

A proximity sensor can include a sensing element having a substrate and an antenna disposed on the substrate. The sensing element generates an electromagnetic field directed toward the component of the asset. The proximity sensor and the component of the asset are located sufficiently proximate to each other such that there is capacitive and/or inductive coupling between the proximity sensor and the component. The close distance between the proximity sensor and the component distorts the electromagnetic field, which affects the power level and/or the frequency and/or phase of the electromagnetic field, which can be detected by the proximity sensor.

The electrical characteristics of raw materials used to manufacture the sensing element can vary during manufacturing. For example, the dielectric constant of the substrate in one proximity sensor can differ from the dielectric constant of the substrate in another proximity sensor manufactured at the same time and for the same design. Similarly, the forming of antenna patterns in different proximity sensors can result in a different level of resistivity between the proximity sensors. This variability can result in different proximity sensors having different performances (e.g., in terms of their resonance frequencies, return losses, linearity, and electromagnetic field radiation patterns). This variability can cause the performance of the proximity sensor to fail to comply with specifications for a particular installation, requiring the proximity sensor to be tuned in order to meet those specifications. Attempts to tune the sensing element (e.g., cutting and tuning the antenna pattern, using jigs or fixtures, etc.) are typically time consuming, can be of limited effectiveness, and can damage the sensing element.

The discussion above is merely provided for general background information and is not intended to be used as an aid in determining the scope of the claimed subject matter.

A tunable proximity sensor and a method of manufacturing the same are disclosed. The proximity sensor includes a cap with different sections having different dielectric constants, shapes, and/or thicknesses. As the cap is rotated with respect the sensing element, these non-uniform sections induce a different loading on the sensor element from the electromagnetic field, allowing the proximity sensor to be tuned. An advantage that may be realized in the practice of some disclosed embodiments is that the proximity sensor can be tuned more easily, quickly, and inexpensively. This can increase the yield in manufacturing of the proximity sensors and lower the cost of manufacturing.

In one embodiment, a proximity sensor is disclosed. The proximity sensor comprises a substrate comprising a first surface, an antenna disposed on the first surface, and a cap comprising a first section made from a first dielectric material having a first dielectric constant, the first section of the cap disposed proximate to the antenna, and a second section made from a second dielectric material having a second dielectric constant, the second section of the cap disposed proximate to the antenna, wherein the first dielectric constant is different than the second dielectric constant.

In another embodiment, a proximity sensor is disclosed. The proximity sensor comprises a substrate comprising a first surface, an antenna disposed on the first surface, and a cap comprising a first section made from a first dielectric material and having a first thickness, the first section of the cap disposed proximate to the antenna, and a second section made from a second dielectric material and having a second thickness, the second section of the cap disposed proximate to the antenna, wherein the first thickness is different than the second thickness.

In yet another embodiment, a method for tuning a proximity sensor having an antenna disposed on a substrate is disclosed. The method comprises the steps of disposing a cap comprising a center portion that includes a non-uniform distribution of at least one dielectric material proximate to the antenna, rotating the cap to a position, and fixing the cap at the position.

This brief description of the invention is intended only to provide a brief overview of subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description. This brief description is not intended to identify key features or essential features of the claimed subject matter, nor is it intended to be used as an aid in determining the scope of the claimed subject matter. The claimed subject matter is not limited to implementations that solve any or all disadvantages noted in the background.

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of the invention. In the drawings, like numerals are used to indicate like parts throughout the various views. Thus, for further understanding of the invention, reference can be made to the following detailed description, read in connection with the drawings in which:
FIG. 1 is a diagram of an exemplary inspection system;
FIG. 2 is a cross-section of an exemplary proximity sensor in a first embodiment of the invention;
FIG. 3 is a view of the underside of the cap of the proximity sensor of FIG. 2;
FIG. 4 is a cross-section of an exemplary proximity sensor in a second embodiment of the invention;
FIG. 5 is a view of the underside of the cap of the proximity sensor of FIG. 4;
FIG. 6 is a cross-section of an exemplary proximity sensor in a third embodiment of the invention;
FIG. 7 is a view of the underside of the cap of the proximity sensor of FIG. 6;
FIG. 8 is a cross-section of an exemplary proximity sensor in a fourth embodiment of the invention;
FIG. 9 is a view of the underside of the cap of the proximity sensor of FIG. 8;
FIG. 10 is a cross-section of an exemplary proximity sensor in a fifth embodiment of the invention;
FIG. 11 is a view of the underside of the cap of the proximity sensor of FIG. 10;
FIG. 12 is a cross-section of an exemplary proximity sensor in a sixth embodiment of the invention;
FIG. 13 is a view of the underside of the cap of the proximity sensor of FIG. 12;
FIG. 14 is a view of the underside of an exemplary cap in a seventh embodiment of the invention;
FIG. 15 is a view of the underside of an exemplary cap in an eighth embodiment of the invention; and
FIG. 16 is an exemplary method for tuning a proximity sensor in one embodiment of the invention.

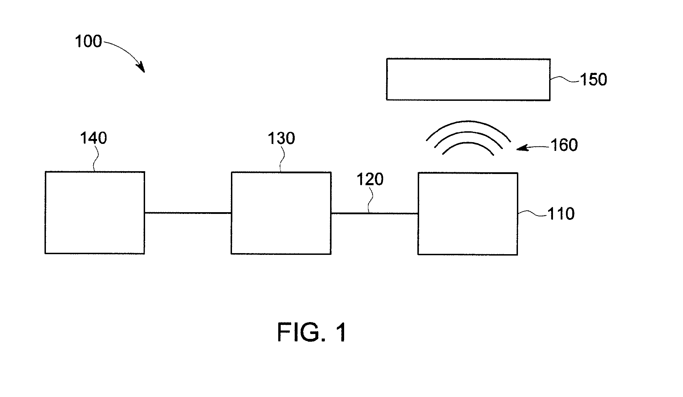

FIG. 1 is a diagram of an exemplary inspection system 100 that can measure, monitor, and inspect an asset 150 (e.g., a turbine component). The inspection system 100 comprises a proximity sensor 110 connected by a cable 120 to a signal generation and processing component 130, which can be connected to a diagnostic monitor 140. The proximity sensor 110 and cable 120 are collectively referred to herein as a proximity sensor assembly 140.

The signal generation and processing component 130 outputs an electrical driving signal to the proximity sensor 110 that causes the proximity sensor 110 to generate an electromagnetic field 160 that projects away from the proximity sensor 110. In one embodiment, the proximity sensor 110 is a microwave proximity sensor as the electrical driving signal is a signal having a frequency in the microwave range, and is also referred to herein as a microwave driving signal. As used herein, the term "microwave" refers to electrical signals with frequencies of about 300 MHz or greater and, in one example, from about 300 MHz to about 300 GHz.

In one embodiment, the proximity sensor 110 and the asset 150 are located sufficiently proximate to each other such that there is capacitive and/or inductive coupling between the proximity sensor 110 and the asset 150. The close distance between the proximity sensor 110 and the asset 150 distorts the electromagnetic field 160, which affects the power level, the frequency, the phase of the electromagnetic field 160, and/or the impedance of the sensing element of the proximity sensor 110, which can be sensed by the proximity sensor 110. These characteristics change based on the distance between the proximity sensor 110 and the asset 150, and are monitored by the signal generation and processing component 130 to determine the distance between the proximity sensor 110 and the asset 150 over time, which can be used to determine, e.g., the vibration, position, etc., of the asset 150 over time.

In one embodiment, the diagnostic monitor 140 can be an independent component that receives signals from the signal generation and processing component 130 that are representative of the distance between the proximity sensor 110 the asset 150. The diagnostic monitor 140 can process these signals, generating one or more output signals, which can be transmitted to additional components such as a display, a supervisory control and data acquisition (SCADA) system, etc., that can display a textual and/or graphical representation of the operating characteristics of the asset (e.g., vibration, position, etc.) over time and relative to a location of the proximity sensor 110.

Several embodiments of a tunable proximity sensor and a method of manufacturing the same are disclosed. The proximity sensor includes a cap with different sections having different dielectric constants, shapes, and/or thicknesses. As the cap is rotated with respect the sensing element, these non-uniform sections induce a different loading on the sensor element from the electromagnetic field, allowing the resonance frequency, return loss, linearity, and electromagnetic field radiation patterns of the proximity sensor to be tuned.

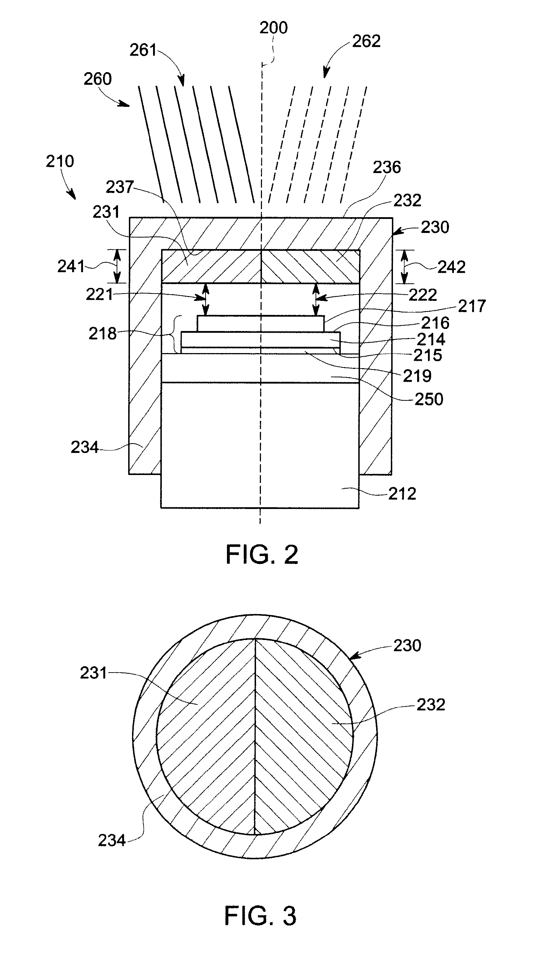

FIG. 2 is a cross-section of an exemplary proximity sensor 210 in a first embodiment of the invention. FIG. 3 is a view of the underside of the cap 230 of the proximity sensor 210 of FIG. 2. The proximity sensor 210 includes a sensing element 218 having a substrate 214 and an antenna 217 disposed on the first surface 216 of the substrate 214 and a ground plane 219 disposed on the second surface 215 of the substrate 214. In one embodiment, the antenna 217 can be a spiral antenna. The substrate 214 can be mounted on a spacer 250, which is mounted on a base 212. The side wall 234 of the cap 230 can be attached to the base 212 in a manner to allow rotation of the cap 230 with respect to the sensing element 218 (e.g., threads, grooves, etc.). The inner surface 237 of the center section 236 of the cap 230 has a first section 231 made from a first dielectric material having a first dielectric constant (e.g., DK = 3) and a second section 232 made from a second dielectric material having a second dielectric constant (e.g., DK = 5), where the first dielectric constant is different than the second dielectric constant. The first section 231 and the second section 232 of the cap 230 are disposed proximate to the antenna 217. The sensing element 218 of the proximity sensor 210 generates an electromagnetic field 260 having a first section 261 that passes through the first section 231 of the cap 230 and a second section 262 that passes through the second section 232 of the cap 230.

As shown in FIGS. 2 and 3, the two-dimensional shape of the first section 231 of the cap 230 (e.g., a semi-circle) is the same as the two-dimensional shape of the second section 232 of the cap 230. In addition, the thickness 241 of the first section 231 of the cap 230 is the same as the thickness 242 of the second section 232 of the cap 231. This results in a first air gap 221 between the antenna 217 and the first section 231 being the same as the second air gap 222 between the antenna 217 and the second section 232. The configuration of the cap 230 shown in FIGS. 2 and 3 exposes different sections of the sensing element 218 to different dielectric constant effects, which will induce different loading on the sensing element 218 as the cap 230 is rotated with respect to the sensing element 218 about the centerline 200 of the proximity sensor 210. In some embodiments, rotation of the cap 230 changes the first air gap 221 and second air gap 222 as the cap 230 moves closer to or further away from the sensing element 217, while in other embodiments, the rotation does not change the air gaps 221, 222.

In the exemplary proximity sensor 210 shown in FIGS. 2 and 3, while the dielectric constants of the first section 231 and second section 232 are different, the two-dimensional shapes and the thicknesses of the sections 231, 232 are the same. Using different two-dimensional shapes (e..g, different in size and/or configuration (oval, banana-shaped, semi-circle, triangle, etc.)) and/or thicknesses for the different sections 231, 232 can provide further non-uniformity of the cap 230 and result in different sections of the sensing element 218 being exposed to different dielectric constants.

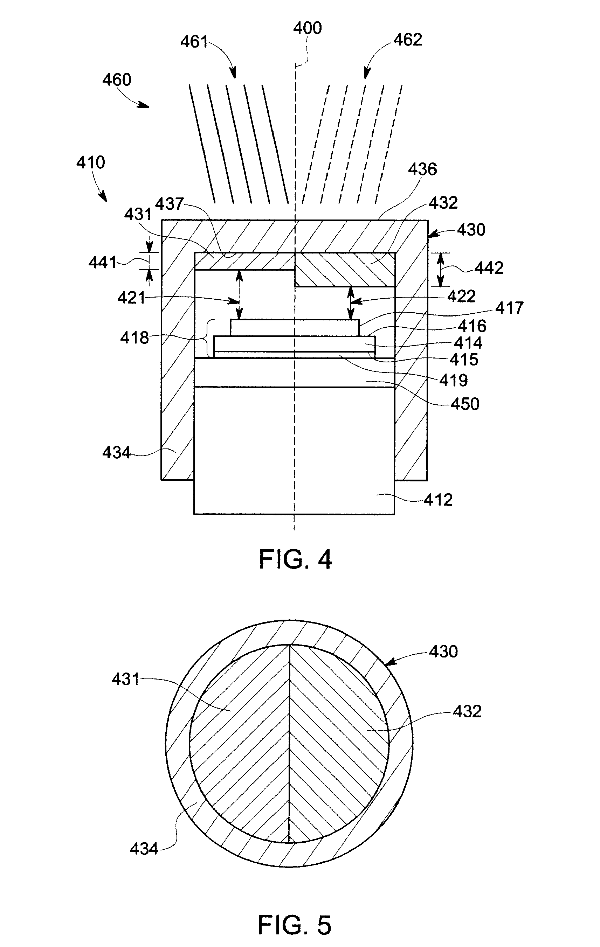

FIG. 4 is a cross-section of an exemplary proximity sensor 410 in a second embodiment of the invention. FIG. 5 is a view of the underside of the cap 430 of the proximity sensor 410 of FIG. 4. In this embodiment, the thickness 441 of the first section 431 is different than the thickness 442 of the second section 432. The proximity sensor 410 includes a sensing element 418 having a substrate 414 and an antenna 417 disposed on the first surface 416 of the substrate 414 and a ground plane 419 disposed on the second surface 415 of the substrate 414. The substrate 414 can be mounted on a spacer 450, which is mounted on a base 412. The side wall 434 of the cap 430 can be attached to the base 412 in a manner to allow rotation of the cap 430 with respect to the sensing element 418. The inner surface 437 of the center section 436 of the cap 430 has a first section 431 made from a first dielectric material having a first dielectric constant and a second section 432 made from a second dielectric material having a second dielectric constant, where the first dielectric constant is different than the second dielectric constant. The first section 431 and the second section 432 of the cap 430 are disposed proximate to the antenna 417. The sensing element 418 of the proximity sensor 410 generates an electromagnetic field 460 having a first section 461 that passes through the first section 431 of the cap 430 and a second section 462 that passes through the second section 432 of the cap 430.

As shown in FIGS. 4 and 5, the two-dimensional shape of the first section 431 of the cap 430 (e.g., a semi-circle) is the same as the two-dimensional shape of the second section 432 of the cap 430. In addition, the thickness 441 of the first section 431 of the cap 430 is different than the thickness 442 of the second section 432 of the cap 431. This results in a first air gap 421 between the antenna 417 and the first section 431 being different than the second air gap 422 between the antenna 417 and the second section 432. The configuration of the cap 430 shown in FIGS. 4 and 5 exposes different sections of the sensing element 418 to different dielectric constant effects, which will induce different loading on the sensing element 418 as the cap 430 is rotated with respect to the sensing element 418 about the centerline 400 of the proximity sensor 410.

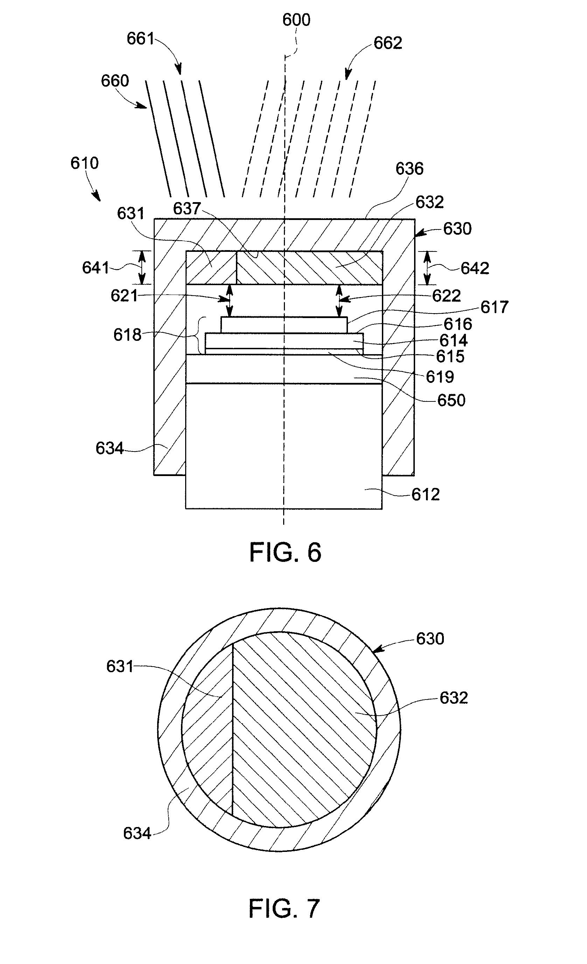

FIG. 6 is a cross-section of an exemplary proximity sensor 610 in a third embodiment of the invention. FIG. 7 is a view of the underside of the cap 630 of the proximity sensor 610 of FIG. 6. In this embodiment, the two-dimensional shape of the first section 631 is different than the two-dimensional shape of the second section 632. The proximity sensor 610 includes a sensing element 618 having a substrate 614 and an antenna 617 disposed on the first surface 616 of the substrate 614 and a ground plane 619 disposed on the second surface 615 of the substrate 614. The substrate 614 can be mounted on a spacer 650, which is mounted on a base 612. The side wall 634 of the cap 630 can be attached to the base 612 in a manner to allow rotation of the cap 630 with respect to the sensing element 618. The inner surface 637 of the center section 636 of the cap 630 has a first section 631 made from a first dielectric material having a first dielectric constant and a second section 632 made from a second dielectric material having a second dielectric constant, where the first dielectric constant is different than the second dielectric constant. The first section 631 and the second section 632 of the cap 630 are disposed proximate to the antenna 617. The sensing element 618 of the proximity sensor 610 generates an electromagnetic field 660 having a first section 661 that passes through the first section 631 of the cap 630 and a second section 662 that passes through the second section 632 of the cap 630.

As shown in FIGS. 6 and 7, the two-dimensional shape of the first section 631 of the cap 630 is different than the two-dimensional shape of the second section 632 of the cap 630. In addition, the thickness 641 of the first section 631 of the cap 630 is the same as the thickness 642 of the second section 632 of the cap 631. This results in a first air gap 621 between the antenna 617 and the first section 631 being the same as the second air gap 622 between the antenna 617 and the second section 632. The configuration of the cap 630 shown in FIGS. 6 and 7 exposes different sections of the sensing element 618 to different dielectric constant effects, which will induce different loading on the sensing element 618 as the cap 630 is rotated with respect to the sensing element 618 about the centerline 600 of the proximity sensor 610.

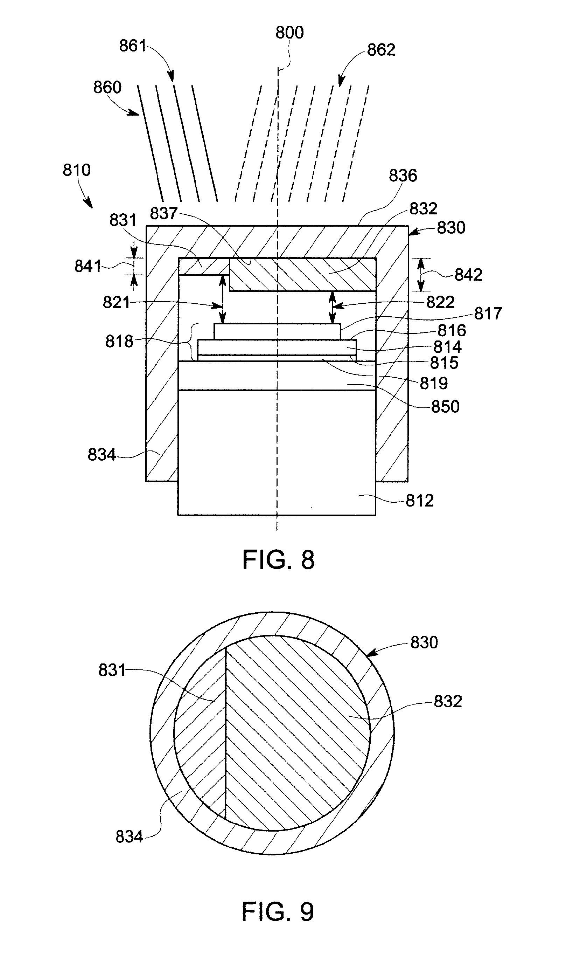

FIG. 8 is a cross-section of an exemplary proximity sensor 810 in a fourth embodiment of the invention. FIG. 9 is a view of the underside of the cap 830 of the proximity sensor 810 of FIG. 8. In this embodiment, the thickness 841 and the two-dimensional shape of the first section 831 is different than the thickness 842 and the two-dimensional shape of the second section 832. The proximity sensor 810 includes a sensing element 818 having a substrate 814 and an antenna 817 disposed on the first surface 816 of the substrate 814 and a ground plane 819 disposed on the second surface 815 of the substrate 814. The substrate 814 can be mounted on a spacer 850, which is mounted on a base 812. The side wall 834 of the cap 830 can be attached to the base 812 in a manner to allow rotation of the cap 830 with respect to the sensing element 818. The inner surface 837 of the center section 836 of the cap 830 has a first section 831 made from a first dielectric material having a first dielectric constant and a second section 832 made from a second dielectric material having a second dielectric constant, where the first dielectric constant is different than the second dielectric constant. The first section 831 and the second section 832 of the cap 830 are disposed proximate to the antenna 817. The sensing element 818 of the proximity sensor 810 generates an electromagnetic field 860 having a first section 861 that passes through the first section 831 of the cap 830 and a second section 862 that passes through the second section 832 of the cap 830.

As shown in FIGS. 8 and 9, the two-dimensional shape of the first section 831 of the cap 830 is different than the two-dimensional shape of the second section 832 of the cap 830. In addition, the thickness 841 of the first section 831 of the cap 830 is different than the thickness 842 of the second section 832 of the cap 831. This results in a first air gap 821 between the antenna 817 and the first section 831 being different than the second air gap 822 between the antenna 817 and the second section 832. The configuration of the cap 830 shown in FIGS. 8 and 9 exposes different sections of the sensing element 818 to different dielectric constant effects, which will induce different loading on the sensing element 818 as the cap 830 is rotated with respect to the sensing element 818 about the centerline 800 of the proximity sensor 810.

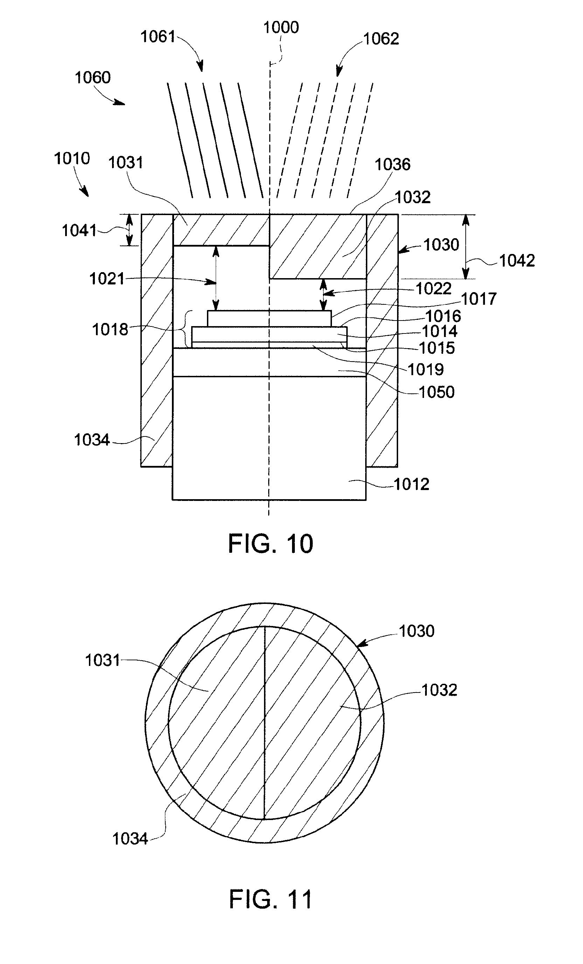

FIG. 10 is a cross-section of an exemplary proximity sensor 1010 in a first embodiment of the invention. FIG. 11 is a view of the underside of the cap 1030 of the proximity sensor 1010 of FIG. 10. In this embodiment, the dielectric constant of the first dielectric material of the first section 1031 is the same as the dielectric constant of the second dielectric material of the second section 1032, but the thicknesses 1041, 1042 of the sections 1031, 1032 are different. The proximity sensor 1010 includes a sensing element 1018 having a substrate 1014 and an antenna 1017 disposed on the first surface 1016 of the substrate 1014 and a ground plane 1019 disposed on the second surface 1015 of the substrate 1014. The substrate 1014 can be mounted on a spacer 1050, which is mounted on a base 1012. The side wall 1034 of the cap 1030 can be attached to the base 1012 in a manner to allow rotation of the cap 1030 with respect to the sensing element 1018. The center section 1036 of the cap 1030 has a first section 1031 made from a first dielectric material having a first dielectric constant and a second section 1032 made from a second dielectric material having a second dielectric constant, where the first dielectric constant is the same as the second dielectric constant. In one embodiment, the cap 1030 is made as a single piece of the same dielectric material. The first section 1031 and the second section 1032 of the cap 1030 are disposed proximate to the antenna 1017. The sensing element 1018 of the proximity sensor 1010 generates an electromagnetic field 1060 having a first section 1061 that passes through the first section 1031 of the cap 1030 and a second section 1062 that passes through the second section 1032 of the cap 1030.

As shown in FIGS. 10 and 11, the two-dimensional shape of the first section 1031 of the cap 1030 (e.g., a semi-circle) is the same as the two-dimensional shape of the second section 1032 of the cap 1030. In addition, the thickness 1041 of the first section 1031 of the cap 1030 is different than the thickness 1042 of the second section 1032 of the cap 1031. This results in a first air gap 1021 between the antenna 1017 and the first section 1031 being different than the second air gap 1022 between the antenna 1017 and the second section 1032. The configuration of the cap 1030 shown in FIGS. 10 and 11 exposes different sections of the sensing element 1018 to different dielectric constant effects, which will induce different loading on the sensing element 1018 as the cap 1030 is rotated with respect to the sensing element 1018 about the centerline 1000 of the proximity sensor 1010.

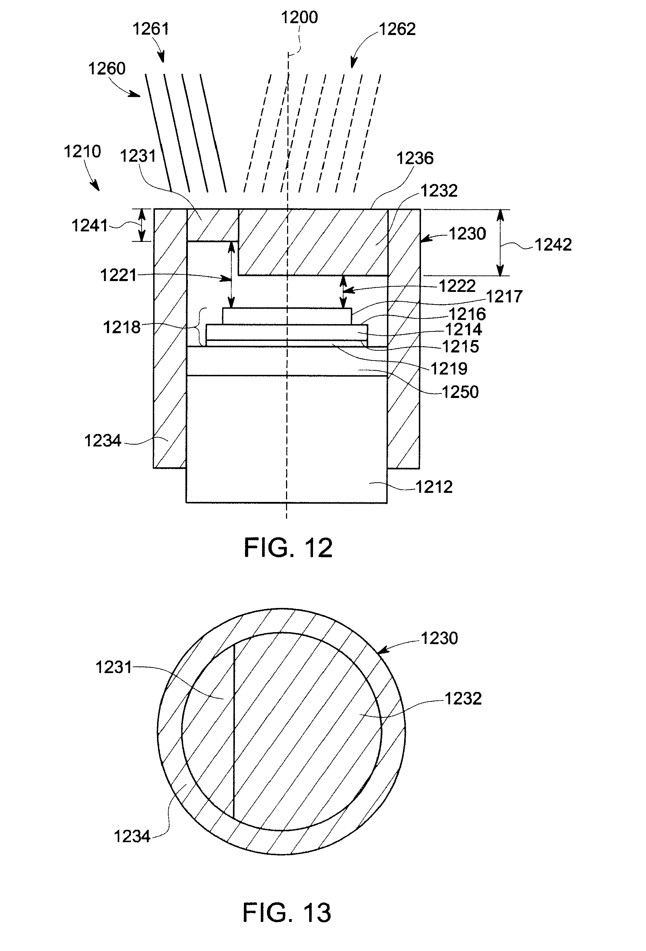

FIG. 12 is a cross-section of an exemplary proximity sensor 1210 in a first embodiment of the invention. FIG. 13 is a view of the underside of the cap 1230 of the proximity sensor 1210 of FIG. 12. In this embodiment, the dielectric constant of the first dielectric material of the first section 1231 is the same as the dielectric constant of the second dielectric material of the second section 1232, but the thicknesses 1241, 1242 and two-dimensional shapes of the sections 1231, 1232 are different. The proximity sensor 1210 includes a sensing element 1218 having a substrate 1214 and an antenna 1217 disposed on the first surface 1216 of the substrate 1214 and a ground plane 1219 disposed on the second surface 1215 of the substrate 1214. The substrate 1214 can be mounted on a spacer 1250, which is mounted on a base 1212. The side wall 1234 of the cap 1230 can be attached to the base 1212 in a manner to allow rotation of the cap 1230 with respect to the sensing element 1218. The center section 1236 of the cap 1230 has a first section 1231 made from a first dielectric material having a first dielectric constant and a second section 1232 made from a second dielectric material having a second dielectric constant, where the first dielectric constant is the same as the second dielectric constant. In one embodiment, the cap 1230 is made as a single piece of the same dielectric material. The first section 1231 and the second section 1232 of the cap 1230 are disposed proximate to the antenna 1217. The sensing element 1218 of the proximity sensor 1210 generates an electromagnetic field 1260 having a first section 1261 that passes through the first section 1231 of the cap 1230 and a second section 1262 that passes through the second section 1232 of the cap 1230.

As shown in FIGS. 12 and 13, the two-dimensional shape of the first section 1231 of the cap 1230 is different than the two-dimensional shape of the second section 1232 of the cap 1230. In addition, the thickness 1241 of the first section 1231 of the cap 1230 is different than the thickness 1242 of the second section 1232 of the cap 1231. This results in a first air gap 1221 between the antenna 1217 and the first section 1231 being different than the second air gap 1222 between the antenna 1217 and the second section 1232. The configuration of the cap 1230 shown in FIGS. 12 and 13 exposes different sections of the sensing element 1218 to different dielectric constant effects, which will induce different loading on the sensing element 1218 as the cap 1230 is rotated with respect to the sensing element 1218 about the centerline 1200 of the proximity sensor 1210.

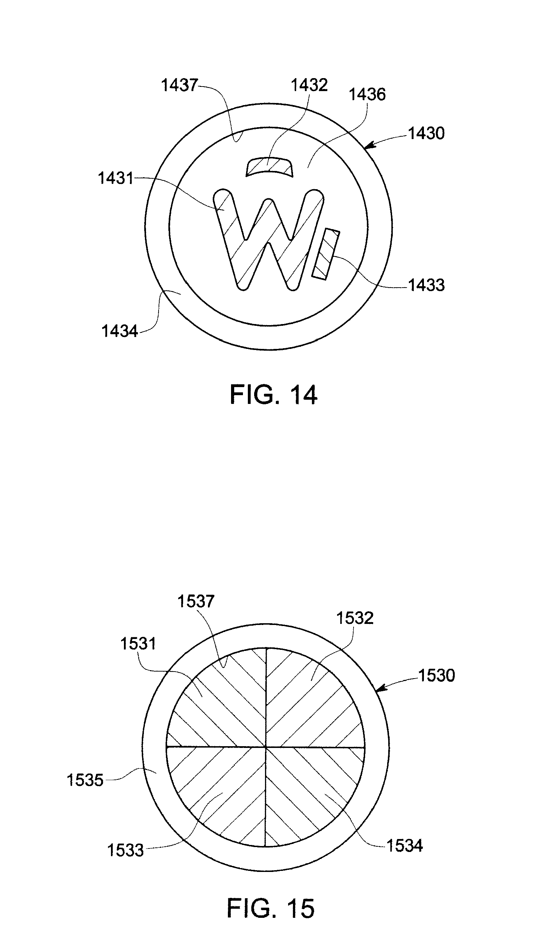

FIG. 14 is a view of the underside of an exemplary cap 1430 in a seventh embodiment of the invention. The inner surface 1437 of the center section of the cap 1430 has a first section 1431 having a first two-dimensional shape, a second section 1432 having a section two-dimensional shape, and a third section 1433 having a third two-dimensional shape, where all of the two-dimensional shapes are different. In this embodiment, the thicknesses and/or the dielectric constants of the different sections 1431, 1432, 1433 can be the same or different. The configuration of the cap 1430 shown in FIG. 14 exposes different sections of the sensing element to different dielectric constant effects, which will induce different loading on the sensing element as the cap is rotated with respect to the sensing element of the proximity sensor.

FIG. 15 is a view of the underside of an exemplary cap 1530 in an eighth embodiment of the invention. The inner surface 1537 of the center section of the cap 1530 has a first section 1531 having a first two-dimensional shape, a second section 1532 having a section two-dimensional shape, a third section 1533 having a third two-dimensional shape, and a fourth section 1533 having a fourth two-dimensional shape, where all of the two-dimensional shapes are the same (e.g., pie sections). In this embodiment, the thicknesses and/or the dielectric constants of the different sections 1531, 1532, 1533, 1534 are different. The configuration of the cap 1530 shown in FIG. 15 exposes different sections of the sensing element to different dielectric constant effects, which will induce different loading on the sensing element as the cap is rotated with respect to the sensing element of the proximity sensor.

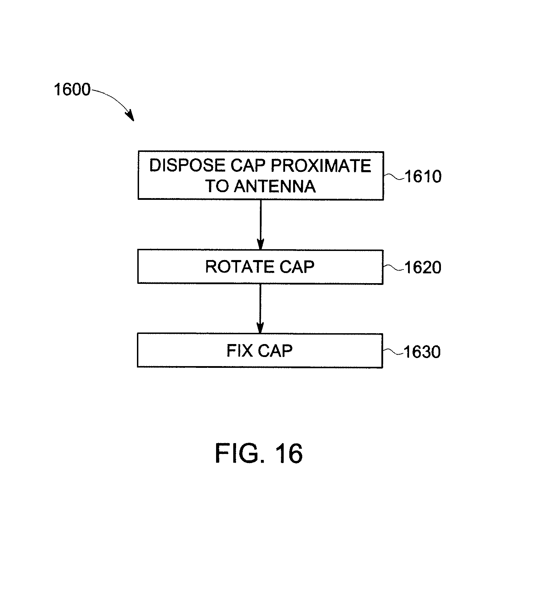

FIG. 16 is an exemplary method 1600 for tuning a proximity sensor in one embodiment of the invention. At step 1610, a cap comprising a center portion that includes a non-uniform distribution of at least one dielectric material is disposed proximate to an antenna. At step 1620, the cap is rotate to a position where the proximity sensor is tuned within specifications. At step 1630, the cap is fixed at that position such that the proximity sensor meets the requires specifications. The cap can be fixed using a variety of techniques or components, including, for example, a laser weld, plastic mold, or a metal ring.

In the disclosed embodiments, a number of different materials can be used for the different sections of the cap, including polyetheretherketone (PEEK), encapsulate dielectrics, polyimide, polymers, and SU-8. Also, while the disclosed embodiments may show certain types and numbers of shapes for the different sections of the cap, it will be understood that different types of shapes and different numbers of sections (e.g., an array of shapes or voids) can be used in the inventive cap.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. For example, while the first section and second section of the cap are shown disposed substantially planar to the first surface of the substrate in the disclosed embodiments, it will be understood that the sections can be disposed at a different orientation (e.g., at a slope relative to the first surface of the substrate). Similarly, it will also be understood that while the first section and second section of the cap are shown where each has a uniform thickness, it will be understood that the sections can have variable thicknesses or that the underside of the cap can have a variable thickness profile (e.g., radially or circumferentially) which can be considered two or more discrete sections.

## Claims

1. A proximity sensor (210) comprising:
a substrate (214) comprising a first surface (216);
an antenna (217) disposed on the first surface (216); and
a cap (230) comprising
a first section (231) made from a first dielectric material having a first dielectric constant, the first section of the cap disposed proximate to the antenna (217), and
a second section (232) made from a second dielectric material having a second dielectric constant, the second section of the cap disposed proximate to the antenna (217),
wherein the first dielectric constant is different than the second dielectric constant.

2. The proximity sensor of claim 1, wherein the first section (231) of the cap has a first thickness and the second section (232) of the cap has a second thickness, wherein the first thickness is the same as the second thickness.

3. The proximity sensor of claim 1, wherein the first section (231) of the cap has a first thickness and the second section (232) of the cap has a second thickness, wherein the first thickness is different than the second thickness.

4. A proximity sensor (210) comprising:
a substrate (214) comprising a first surface (216);
an antenna (217) disposed on the first surface (216); and
a cap (230) comprising
a first section (231) made from a first dielectric material and having a first thickness, the first section of the cap disposed proximate to the antenna (217), and
a second section (232) made from a second dielectric material and having a second thickness, the second section of the cap disposed proximate to the antenna (217), wherein the first thickness is different than the second thickness.

5. The proximity sensor of claim 4, wherein the first dielectric material has a first dielectric constant and the second dielectric material has a second dielectric constant, wherein the first dielectric constant is the same as the second dielectric constant.

6. The proximity sensor of any preceding claim, wherein the first section (231) of the cap has a first two-dimensional shape and the second section (232) of the cap has a second two-dimensional shape, wherein the first two-dimensional shape is the same as the second two-dimensional shape.

7. The proximity sensor of any preceding claim, wherein the first section (231) of the cap has a first two-dimensional shape and the second section (232) of the cap has a second two-dimensional shape, wherein the first two-dimensional shape is different than the second two-dimensional shape.

8. The proximity sensor of any preceding claim, wherein the first section (231) of the cap is disposed substantially planar to the first surface of the substrate (214).

9. The proximity sensor of any preceding claim, wherein the first section (231) of the cap is disposed at a slope relative to the first surface of the substrate (214).

10. A method for tuning a proximity sensor (210) having an antenna disposed on a substrate, the method comprising the steps of:
disposing a cap (230) comprising a center portion that includes a non-uniform distribution of at least one dielectric material proximate to the antenna (217);
rotating the cap (230) to a position; and
fixing the cap (230) at the position.
